# EUROPÄISCHE PATENTANMELDUNG

(11) **EP 1 842 754 A2**
(43) Veröffentlichungstag der Anmeldung: **10.10.2007**
(21) Anmeldenummer: 07014829.1
(22) Anmeldetag: 05.12.2005
(51) Int. Cl.: B60S 9/215, B62D 59/04

(54) **Hilfsantrieb für einen Anhänger**

(30) Priorität: 06.12.2004 DE 102004058738
(62) Teilanmeldung aus: 05813675.5
(71) Anmelder: Truma Gerätetechnik GmbH & Co. KG, 85640 Putzbrunn (DE)
(72) Erfinder: Wickelmaier, Peter, 81671 München (DE); Brunnhuber, Hans-Georg, 83627 Wangau (DE); Brandtner, Josef, 82110 Germering (DE); Achatz, Dieter, 81673 München (DE); Müller, Jörg, 86916 Kaufering (DE); Fechner, Michael, 85625 Glonn (DE); Schulz, Axel, 85241 Ampermoching (DE)
(74) Vertreter: Müller - Hoffmann & Partner

(57) **Zusammenfassung**

Ein Hilfsantrieb für einen Anhänger weist einen relativ zu einem Fahrgestell (1) bewegbaren Träger (3) auf, der einen Antriebsmotor hält, mit dem ein Rad (2) des Anhängers angetrieben werden kann. Der Träger (3) ist mittels eines Betätigungshebels (7) zwischen einer Antriebsposition A und einer Ruheposition R verschwenkbar. Der für die Übertragung der Bewegung des Handbetätigungselements (7) vorgesehene Bewegungsmechanismus weist einen Energiespeicher (10, 15) oder einen Servoantrieb (20) auf, um den Bediener vor hohen Bedienkräften zu schonen.

## Beschreibung

Die Erfindung betrifft einen Hilfsantrieb für einen Anhänger, insbesondere für einen Wohnwagen.

Anhänger werden üblicherweise von Zugmaschinen gezogen. So ist es bekannt, dass ein PKW einen Wohnwagen ziehen kann. Wenn der Anhänger von der Zugmaschine abgenommen ist, wird er üblicherweise von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Hilfsantriebe entwickelt, die es ermöglichen, auch ohne Zugmaschine einen Anhänger mit Motorunterstützung zu verschieben bzw. zu drehen.

Aus der EP 0 827 898 A1 ist ein Hilfsantrieb für einen Anhänger bekannt, bei dem ein Rahmenteil fest mit dem Fahrgestell des Anhängers verbunden ist. Der Rahmenteil trägt einen relativ zu dem Rahmenteil bewegbaren Träger, von dem wiederum ein Antriebsmotor mit einer von dem Antriebsmotor antreibbaren Antriebswalze gehalten wird. Weiterhin ist ein Bewegungsmechanismus vorgesehen, zum Bewegen des Trägers zwischen einer Ruheposition, in der die Antriebswalze von einem Reifen des Anhängers getrennt ist, und einer Antriebsposition, in der die Antriebswalze gegen den Reifen des Trägers gedrückt wird. Die Änderung der Position des Trägers erfolgt manuell mit Hilfe eines Hebels, der an dem Träger angesetzt werden kann.

In der EP 1 203 713 A1 wird ein anderer Hilfsantrieb für einen Anhänger beschrieben, der jedoch nach dem gleichen Prinzip arbeitet. Während jedoch die Antriebswalze bei dem Hilfsantrieb gemäß EP 0 827 898 A1 um eine horizontale, zur Radachse parallele Achse verschwenkt wird, ist bei dem Hilfsantrieb gemäß EP.1 203 713 A1 eine vertikale Schwenkachse vorgesehen.

Das Verschwenken des Trägers aus der Ruheposition in die Antriebsposition erfolgt meist in Zusammenwirken mit einem Kniehebelmechanismus, der sicherstellt, dass der Träger in der jeweiligen Endstellung, d.h. der Antriebs- oder der Ruheposition arretiert ist.

Der Träger wird mit Hilfe eines Betätigungshebels oder einer Kurbel verschwenkt. Aufgrund der zum Überwinden des Kniehebelmechanismus erforderlichen hohen Kräfte sind entsprechend große Schwenkwinkel für einen Betätigungshebel erforderlich. Trotzdem lässt es sich nicht verhindern, dass die jeweilige Endlage des Trägers nach Überwinden der Mittelstellung des Kniehebelmechanismus nur mit großem Krafteinsatz und meist ruckartig erreicht wird. Dies ist für den Bediener nicht nur anstrengend, sondern birgt auch die Gefahr in sich, dass der Bediener seine Finger einklemmt. Wenn der Träger mit Hilfe eines Kurbelantriebs verschwenkt werden soll, ist es erforderlich, dass der Bediener eine meist schlecht erreichbare Kurbel betätigt, wozu er sich in die Hockstellung begeben muss. Aufgrund des Übersetzungsverhältnisses bei Kurbelantrieben ist es für ihn dabei schwierig, die jeweiligen Endstellungen klar zu erkennen. Dadurch besteht die Gefahr, dass die Antriebswalze nicht mit ausreichender Druckkraft an die Lauffläche des von ihr anzutreibenden Rads des Anhängers angedrückt wird und bei dem Versuch, den Anhänger zu verfahren, durchdreht.

Aus der DE 35 32 993 A1 ist ein Radfahrzeug bekannt, das von einem Elektromotor über ein Antriebsrad antreibbar ist. Das Antriebsrad ist an einem Träger gelagert und zwischen einer Antriebsposition und einer Ruheposition bewegbar.

In der EP 1 447 312 A1 wird ein Hilfsantrieb für Anhänger beschrieben, mit zwei Motor-betriebenen Antriebsrollen, die von einem Träger gehalten sind. Der Träger ist relativ zu dem Fahrgestell beweglich. Dazu wird eine Antriebsbewegung über ein Hebelsystem übertragen.

Der Erfindung liegt die Aufgabe zugrunde, einen Hilfsantrieb für einen Anhänger anzugeben, bei dem das Bewegen des Trägers zwischen seiner Ruheposition und der Antriebsposition komfortabel möglich ist, sodass der Bediener insbesondere vor ungünstigen Körperhaltungen oder übermäßigem Krafteinsatz bewahrt wird.

Die Aufgabe wird erfindungsgemäß durch einen Hilfsantrieb für einen Anhänger gemäß einem der Patentansprüche 1 oder 8 gelöst.

Nach der in Anspruch 1 angegebenen Variante der Erfindung ist ein Bewegungsmechanismus vorgesehen, zum Bewegen des Trägers zwischen einer Ruheposition, in der die Antriebswalze von einem Rad des Anhängers getrennt ist, und einer Antriebsposition, in der die Antriebswalze gegen das Rad des Anhängers gedrückt wird. Der Bewegungsmechanismus weist ein analog zu den Positionen des Trägers zwischen einer Ruheposition und einer Antriebsposition bewegbares Handbetätigungselement, wie z.B. einen Betätigungshebel, auf, dessen Bewegung über den Bewegungsmechanismus auf den Träger übertragen wird. Erfindungsgemäß weist der Bewegungsmechanismus einen Energiespeicher auf, wobei der Energiespeicher während eines ersten Bewegungsabschnitts des Handbetätigungselements aufladbar ist, während der Energiespeicher während eines zweiten Bewegungsabschnitts des Handbetätigungselements entladbar ist, um die Bewegung des Trägers zu unterstützen. Dabei liegt der zweite Bewegungsabschnitt in dem Bewegungsvorgang beim Bewegen des Handbetätigungselements aus der Ruheposition in die Antriebsposition.

Mit Hilfe der Erfindung ist es somit möglich, dass der Bediener während des ersten Bewegungsabschnitts das Handbetätigungselement mit größerer Kraft betätigt als es zum Bewegen des Trägers alleine erforderlich wäre. Der erste Bewegungsabschnitt umfasst dementsprechend wenigstens einen Teil des Bewegungsbereichs, in dem der Träger noch frei in Richtung des Reifens oder ohne hindernde Kraftwirkung von dem Reifen weg bewegt wird.

In dem zweiten Bewegungsabschnitt hingegen gibt der Energiespeicher die in ihm gespeicherte Energie ab und unterstützt dadurch die Bewegung des Trägers, nämlich insbesondere dann, wenn der Träger die Antriebswalze gegen die Lauffläche des Rads drücken muss. Ebenso kann die frei werdende Energie auch genutzt werden, um z.B. die zum Überwinden eines Kniehebeleffekts erforderliche Maximalkraft abzusenken.

Auf diese Weise ist es durch die Erfindung möglich, die vom Bediener aufzubringende Betätigungskraft zu vergleichmäßigen bzw. bisher insbesondere bei Kniehebelmechanismen auftretende Spitzenkräfte zu mindern. Der Bediener muss nicht - wie bisher - den Bedienhebel zunächst über einen gewissen Bereich ohne großen Widerstand bewegen, um anschließend mit sehr hoher Kraft den Kniehebelmechanismus zu überwinden. Vielmehr kann er mit gleichmäßiger Betätigungskraft den Bedienhebel (Handbetätigungselement) aus der Ruheposition in die Antriebsposition bewegen.

Vorzugsweise umfasst daher der zweite Bewegungsabschnitt wenigstens teilweise den Teil der Bewegung, bei dem die Antriebswalze gegen den Reifen gedrückt wird. Selbstverständlich kann der zweite Bewegungsabschnitt auch andere Bewegungsbereiche, wie insbesondere das Überwinden eines Kniehebelmechanismus, umfassen.

Bei einer besonders vorteilhaften Ausführungsform der Erfindung liegt der erste Bewegungsabschnitt, also der Bewegungsabschnitt, bei dem der Energiespeicher aufgeladen bzw. - sofern er bereits vorgeladen ist - weiter aufgeladen wird, in dem Bewegungsvorgang beim Bewegen des Handbetätigungselements aus der Antriebsposition in die Ruheposition. Das bedeutet, dass der Energiespeicher dann aufgeladen wird, wenn der Träger von dem Reifen wegbewegt wird, um in seine Ruheposition zu gelangen. Die Energie wird dauerhaft gespeichert und steht bei der umgekehrten Bewegung, also beim Bewegen des Trägers aus der Ruheposition in die Antriebsposition, wieder zur Verfügung.

Bei einer anderen Ausführungsform der Erfindung liegt der erste Bewegungsabschnitt in dem Bewegungsvorgang beim Bewegen des Handbetätigungselements aus der Ruheposition in die Antriebsposition, jedoch vor dem zweiten Bewegungsabschnitt, sodass das Handbetätigungselement beim Bewegen aus der Ruheposition in die Antriebsposition zuerst den ersten Bewegungsabschnitt und danach den zweiten Bewegungsabschnitt passiert. Bei dieser Variante wird die Bewegung des Handbetätigungselements zweigeteilt: Zunächst muss das Handbetätigungselement mit erhöhter Kraft bewegt werden, um den Energiespeicher aufzuladen. Dies ist unproblematisch, weil während des ersten Bewegungsabschnitts noch keine erhöhten Kräfte zum Überwinden des Kniehebelmechanismus oder zum Andrücken der Antriebswalze gegen den Reifen erforderlich sind. Wenn jedoch bei der weiteren Bewegung des Handbetätigungselements vom Bediener bei bisher bekannten Hilfsantrieben die erhöhte Bedienkraft abverlangt würde, um den Kniehebel zu überwinden oder die Antriebswalze an den Reifen anzudrücken, entlädt sich jetzt erfindungsgemäß der Energiespeicher und bewirkt eine Kraft, die der Bedienkraft überlagert wird und sie dadurch unterstützt. Dementsprechend kann der Bediener mit im Vergleich zum Stand der Technik geringerer Kraft drücken.

Bei entsprechender Auslegung des Bewegungsmechanismus ist es möglich, dass der Bediener über den gesamten Bewegungsweg des Handbetätigungselements mit nahezu konstanter Kraft drücken bzw. ziehen kann. Durch die Endstellungen des Handbetätigungselements erhält er die Information über die jeweilige Endstellung des Trägers. Eine Rückmeldung über das Überwinden des Kniehebelmechanismus oder das Andrücken der Antriebswalze gegen den Reifen erhält der Bediener jedoch dann nicht, wenn die bisher auftretenden erhöhten Reaktionskräfte durch den Energiespeicher vollständig kompensiert werden.

Vorzugsweise weist der Energiespeicher eine Federeinrichtung mit z.B. einer Schrauben- oder einer Blattfeder auf, die es ermöglicht, die Energie in einfacher Weise auch über einen längeren Zeitraum ohne nennenswerte Verluste zu speichern.

Wenn der Bewegungsmechanismus einen Kniehebelmechanismus aufweist, ist es vorteilhaft, wenn der Kniehebelmechanismus gegen die Wirkung der Federeinrichtung bewegbar ist. Die Federeinrichtung sollte dabei vorteilhafterweise am Knie des Kniehebelmechanismus wirken.

Bei einer anderen Ausführungsform der Erfindung weist der Bewegungsmechanismus eine mit dem Energiespeicher (der Federeinrichtung) zusammen wirkende, bewegbare Kurvenscheibe auf, derart, dass unterschiedliche Kurvenscheiben-Stellungen unterschiedliche Ladezustände des Energiespeichers (Federauslenkung) bewirken. Dadurch kann mit Hilfe der Kurvenscheibe die Feder während des ersten Bewegungsabschnitts gespannt und - bei entsprechender Gestaltung - in dem zweiten Bewegungsabschnitt entspannt werden, sodass die Feder eine entsprechende Drehung der Kurvenscheibe unterstützt.

Eine Variante der Erfindung ist in Anspruch 8 definiert. Dabei weist der Bewegungsmechanismus einen Übertragungsmechanismus auf, mit einer über den Bewegungsweg des Handbetätigungselements veränderlichen Übertragungswirkung, derart, dass ein bestimmter Bewegungsweg des Handbetätigungselements unterschiedlich lange Bewegungswege des Trägers bewirkt, je nachdem, ob sich das Handbetätigungselement und der Träger näher bei der Ruheposition oder näher bei der Antriebsposition befinden.

Erfindungsgemäß ermöglicht es der Übertragungsmechanismus, dass das "Übersetzungsverhältnis" zwischen der Bewegung des Handbetätigungselements und der Bewegung des Trägers veränderlich ist. Ein gleich langer Bewegungsweg (Verschieben oder Verschwenken) des Handbetätigungselements bewirkt auf diese Weise unterschiedlich lange Bewegungswege, je nachdem, in welchem Bereich dieser Bewegungsweg des Händbetätigungselements vollzogen wird.

Besonders vorteilhaft ist es, wenn ein gleich langer Bewegungsweg des Handbetätigungselements in der Nähe der Ruheposition einen größeren Bewegungsweg des Trägers bewirkt als in der Nähe der Antriebsposition. Im Bereich der Ruheposition nämlich muss der Träger üblicherweise nur verschoben werden, wobei die Betätigungskraft lediglich die nicht zu vermeidende Reibung überwinden muss. In der Nähe der Antriebsposition hingegen muss die Handbetätigungskraft nicht nur die Antriebswalze in ausreichendem Maße gegen die Lauffläche des Reifens drücken, sondern z.B. auch einen Kniehebelmechanismus überwinden. Dadurch, dass der Übertragungsmechanismus unterschiedliche Übertragungswirkungen, d.h. unterschiedliche Übersetzungsverhältnisse bzw. Hebelwirkungen ermöglicht, kann in der Nähe der Ruheposition, also in dem Bereich, in dem keine hohen Kräfte zum Bewegen des Trägers erforderlich sind, bereits eine geringe Bewegung des Handbetätigungselements ausreichen, um eine entsprechende Bewegung des Trägers zu erreichen. In der Nähe der Antriebsposition hingegen ist es zur Vergleichmäßigung der Betätigungskraft für den Bediener anzustreben, dass der Träger bei entsprechend gleichem Bewegungsweg des Handbetätigungselements eine geringere, insbesondere kürzere Bewegung vollzieht, wodurch die auf das Handbetätigungselement rückwirkenden Kräfte geringer werden.

Bei einer besonders vorteilhaften Ausführungsform der Erfindung wird beim Bewegen des Handbetätigungselements aus der Ruheposition in die Antriebsposition in einem ersten Bewegungsabschnitt ein erstes Übertragungsverhältnis zwischen der Bewegung des Handbetätigungselements und der Bewegung des Trägers gebildet, derart, dass ein bestimmter Bewegungsweg des Handbetätigungselements einen ersten Bewegungsweg des Trägers bewirkt, wobei in einem zweiten Bewegungsabschnitt ein zweites Übertragungsverhältnis zwischen der Bewegung des Handbetätigungselements und der Bewegung des Trägers gebildet wird, derart, dass der bestimmte Bewegungsweg des Handbetätigungselements einen zweiten Bewegungsweg des Trägers bewirkt. Diese Definition bestätigt das oben bereits Vorgetragene, wonach bei gleichen Bewegungswegen des Handbetätigungselements (allerdings aus verschiedenen Ausgangsstellungen heraus) unterschiedliche Bewegungswege des Trägers erreicht werden.

Dabei ist es vorteilhaft, dass der zweite Bewegungsabschnitt wenigstens teilweise den Teil der Bewegung umfasst, bei dem die Antriebswalze gegen den Reifen gedrückt wird, und dass der zweite Bewegungsweg des Trägers kürzer als der erste Bewegungsweg des Trägers ist.

Um die gewünschte Veränderung des Übertragungsverhältnisses der Bewegung zu erreichen, ist es von besonderem Vorteil, wenn der Übertragungsmechanismus eine Kurvenführung, z.B. in Form eines Exzenters oder einer Kulissenführung aufweist.

Bei anderen Hilfsantrieben ist der Hilfsantrieb nicht mit einem Handbetätigungselement ausgestattet. Vielmehr weist der Bewegungsmechanismus einen Servoantrieb auf, um den Träger zwischen der Ruheposition und der Antriebsposition zu bewegen.

Durch den Servoantrieb wird eine manuelle Betätigung überflüssig. Der Bediener kann mit Hilfe des z.B. fernsteuerbaren Servoantriebs den Träger in die jeweils gewünschte Position verfahren.

Vorzugsweise weist der Servoantrieb ein elektrisches, elektrohydraulisches, elektromagnetisches, hydraulisches, hydro-pneumatisches oder pneumatisches Stellglied auf. Die Energieversorgung kann durch eine in dem Anhänger vorhandene Batterie oder durch eine eigene Energieversorgung übernommen werden. Z.B. ist es dabei möglich, das pneumatische Stellglied mit Hilfe einer elektrischen Camping-Luftpumpe zu betreiben, die ansonsten für andere Zwecke eingesetzt wird. Nur dann, wenn der Bediener den Hilfsantrieb benötigt, wird die elektrisch betriebene Luftpumpe zum Aktivieren des pneumatischen Stellglieds betätigt.

Als hydraulisches Stellglied kann auch ein Hydromotor verwendet werden, der unter Druck stehende Hydraulikflüssigkeit von einer entsprechenden Pumpe erhält.

Besonders vorteilhaft ist es, wenn der Servoantrieb einen elektrischen Hilfsmotor, vorzugsweise mit einem Getriebe, aufweist.

Damit der Hilfsmotor entsprechend klein dimensioniert werden kann, ist es vorteilhaft, wenn das Getriebe einen Spindeltrieb mit hohem Übersetzungsverhältnis aufweist. Der Spindeltrieb ermöglicht es, dass der Motor mit verhältnismäßig hohen Drehzahlen aber niedrigem Drehmoment arbeiten kann und so relativ klein zu dimensionieren ist.

Bei einer besonders vorteilhaften Ausführungsform weist das Fahrgestell des Anhängers wenigstens zwei Räder auf, wobei jedem Rad ein eigener Antriebsmotor und eine eigene Antriebswalze zugeordnet ist. Dabei ist es von Vorteil, wenn der Servoantrieb nur einen gemeinsamen Hilfsmotor aufweist, mit dem gleichzeitig beide Antriebsmotoren und beide Antriebswalzen, also beide Träger zwischen der Ruheposition und der Antriebsposition bewegt werden können. Der Hilfsmotor ist in diesem Fall vorzugsweise in der Mitte zwischen den beiden Rädern anzuordnen.

Die Bewegungsrichtung des Trägers kann beliebig variiert werden. Insbesondere ist es vorteilhaft, wenn der Träger im Wesentlichen radial und/oder linear zu dem Reifen des Anhängers bewegbar ist.

Dabei kann die Antriebswalze an die Lauffläche des Reifens herangeschwenkt werden. Vorzugsweise ist sie dabei in einer Schwenkebene anschwenkbar, wobei die Schwenkebene entweder senkrecht zu einer Drehachse des Reifens steht, die Drehachse selbst umfasst, oder in einem Winkel zu einer die Drehachse umfassenden Ebene steht.

Weiterhin ist es von Vorteil, wenn eine Arretiereinrichtung vorgesehen ist, zum Arretieren des Trägers relativ zu dem Rahmenteil wenigstens in der Antriebsposition. Dadurch ist sichergestellt, dass die Antriebswalze mit der erforderlichen Druckkraft gegen die Lauffläche des Reifens gedrückt wird.

Diese und weitere vorteilhafte Merkmale der Erfindung werden nachfolgend unter Zuhilfenahme der begleitenden Figuren näher erläutert. Es zeigen:
**Fig. 1** einen exemplarischen Drehmomentenverlauf zum Erläutern der Erfindung;
**Fig. 2** schematisch eine erste Ausführungsform der Erfindung mit einem Hilfsantrieb in einer Zwischenstellung zwischen Ruheposition und Antriebsposition;
**Fig. 3** den Hilfsantrieb aus Fig. 2 in Antriebsposition;
**Fig. 4** ein Drehmomentenschaubild zur Erläuterung des Hilfsantriebs von Fig. 2 und 3;
**Fig. 5** eine schematische Darstellung eines erfindungsgemäßen Hilfsantriebs in einer zweiten Ausführungsform;
**Fig. 6** eine schematische Darstellung des erfindungsgemäßen Hilfsantriebs in einer dritten Ausführungsform;
**Fig. 7** einen Drehmomentenverlauf zur Erläuterung des Hilfsantriebs von Fig. 6;
**Fig. 8** einen schematischen Aufbau eines Hilfsantriebs nach einer vierten Ausführungsform;
**Fig. 9** eine Ausschnittsvergrößerung zu dem Hilfsantrieb von Fig. 8;
**Fig. 10** einen schematischen Aufbau eines Hilfsantriebs nach einer fünften Ausführungsform;
**Fig. 11** einen schematischen Aufbau eines Hilfsantriebs nach einer sechsten Ausführungsform; und
**Fig. 12** eine Ausschnittsvergrößerung zu Fig. 11.

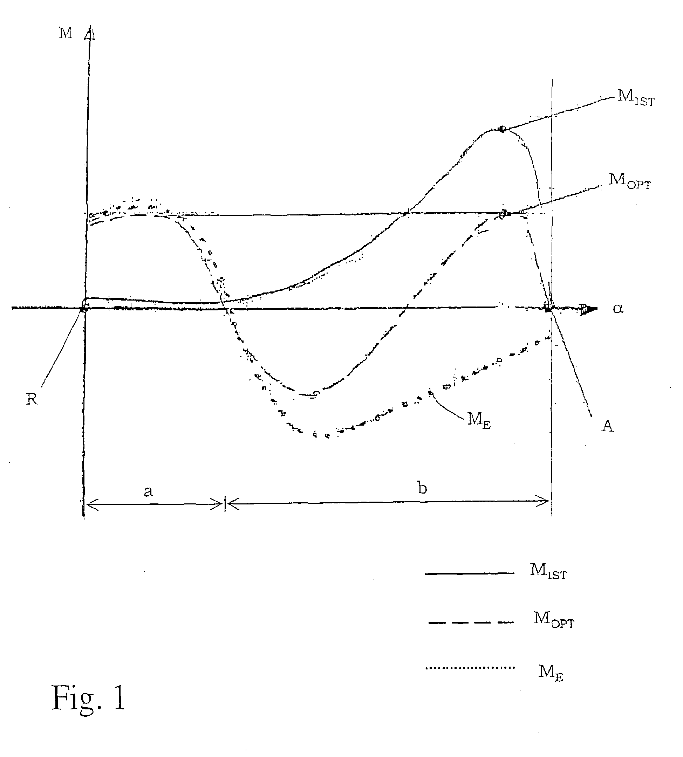

Fig. 1 zeigt mehrere Drehmomentverläufe zur Erläuterung eines ersten, der Erfindung zugrunde liegenden Wirkprinzips.

Dargestellt sind die Verläufe von Drehmomenten, die an einem Handbetätigungselement, z.B. einem Betätigungshebel in Abhängigkeit von dessen Schwenkwinkel α wirken. Der Betätigungshebel ist zwischen einer Ruheposition R (Schwenkwinkel α = 0) und einer Antriebsposition A (Schwenkwinkel α = max) in bekannter Weise verschwenkbar.

Mit M_{IST} ist als durchgezogene Linie der Drehmomentverlauf dargestellt, der üblicherweise an dem Betätigungshebel wirkt, wenn der Hebel vom Bediener aus der Ruheposition R in die Antriebsposition A verschwenkt wird. Dabei muss der Bediener zunächst nur geringe Kräfte aufbringen, da auch nur ein geringes Drehmoment erforderlich ist. Kurz vor der Antriebsposition A jedoch steigt das erforderliche Drehmoment M_{IST} stark an, um einerseits z.B. die Mittel- bzw. Nullstellung eines Kniehebelmechanismus zu überwinden und andererseits eine ausreichend große Andrückkraft zu erzeugen, mit der die Antriebswalze gegen das Rad des Anhängers angedrückt wird. Nach Überwinden des Maximums fällt das Drehmoment dann zu Null ab, weil der Betätigungshebel in seiner Endstellung (Antriebsposition A) stehen bleibt.

Erfindungsgemäß wird nun mit dem Betätigungshebel auch ein Energiespeicher verbunden, der in einem ersten Bewegungsabschnitt a durch das Verschwenken des Betätigungshebels aufgeladen wird. Der erste Bewegungsabschnitt a stellt daher einen gewissen, in der Nähe der Ruheposition R liegenden Schwenkwinkel α dar. Danach schließt sich ein zweiter Bewegungsabschnitt b an, während dem sich der Energiespeicher wieder entlädt und daher die weitere Drehbewegung des Betätigungshebels unterstützt.

Das durch den Energiespeicher wirkende Drehmoment ist als gepunktete Linie M_{E} darstellt. Im ersten Bewegungsabschnitt a ist das Drehmoment M_{E} positiv, sodass der Energiespeicher aufgeladen wird, während die Drehmomentkurve M_{E} im zweiten Bewegungsabschnitt b im negativen Bereich verläuft, sodass der Energiespeicher selbst zur Drehmomentwirkung beiträgt und die Bewegung des Betätigungshebels unterstützt.

Durch Überlagerung des zum Andrücken der Andrückwalze erforderlichen Drehmoments M_{IST} mit dem durch den Energiespeicher wirkenden Drehmoment M_{E} ergibt sich der optimierte Drehmomentverlauf M_{OPT}, der als gestrichelte Linie in Fig. 1 dargestellt ist. Es ist erkennbar, dass der Bediener in dem ersten Bewegungsabschnitt a im Gegensatz zu Bewegungsmechanismen ohne Energiespeicher ein erhöhtes Drehmoment aufbringen muss. Dadurch wird der Energiespeicher geladen. In einem ersten Teil des zweiten Bewegungsabschnitts verläuft die Kurve M_{OPT} im negativen Bereich, d.h., dass die Wirkung des Energiespeichers so stark ist, dass die Antriebswalze nahezu automatisch in Richtung des Reifens bewegt wird. Der Bediener muss viel mehr den Bedienhebel festhalten, damit er ihm nicht entgleitet.

In dem darauf folgenden zweiten Bereich des zweiten Bewegungsabschnitts b verläuft das Drehmoment M_{OPT} wieder im positiven Bereich, sodass der Bediener den Bedienhebel leicht in die Antriebsposition bewegen kann.

Es ist in Fig. 1 deutlich zu erkennen, dass die betragsmäßigen Werte des optimierten Drehmomentverlaufs M_{OPT} stets deutlich unter dem bisher erforderlichen maximalen Drehmomentwert der Kurve M_{IST} liegt. Dementsprechend kann der Bediener durch die Wirkung des Energiespeichers den Hilfsantrieb mit geringeren, vergleichmäßigten Bedienkräften bewegen.

Fig. 1 zeigt die Drehmomentverläufe nur exemplarisch, um das Prinzip zu erläutern. Selbstverständlich ist es je nach Gestaltung des Energiespeichers und des Bewegungsmechanismus zum Bewegen der Antriebswalze möglich, auch andere Drehmomentverläufe zu erreichen. So kann es z.B. anzustreben sein, dass das optimierte Drehmoment M_{OPT} niemals negativ wird, sodass der Bediener den Bedienhebel stets nur in eine Richtung drücken muss und nicht in der Gegenrichtung halten muss. Weiterhin ist es selbstverständlich, dass der Energieinhalt des Energiespeichers beim Laden und beim Entladen - eventuelle Reibungsverluste vernachlässigt - gleich sein muss, was in Fig. 1 nicht vollständig zum Ausdruck gebracht ist. Darüber hinaus ist eine Vorspannung des Energiespeichers zu berücksichtigen.

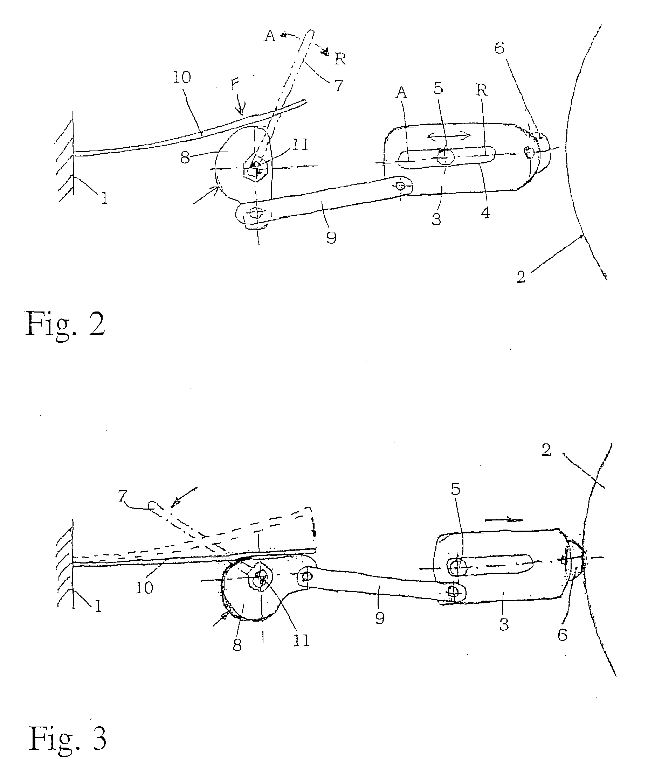

Das anhand von Fig. 1 erläuterte Prinzip wird nun anhand von in den Fig. 2 bis 5 dargestellten Ausführungsformen näher erläutert.

Fig. 2 zeigt schematisch einen erfindungsgemäßen Hilfsantrieb für einen Anhänger. Der Anhänger weist ein Fahrgestell 1 auf, das üblicherweise von einer oder zwei Radachsen getragen wird. An den Radachsen sind in bekannter Weise Räder befestigt, wobei in Fig. 2 ein Reifen eines Rades 2 fragmentarisch dargestellt ist.

Der Hilfsantrieb weist einen starr mit dem Fahrgestell 1 verbundenen Rahmenteil auf, wobei es sich bei dem Rahmenteil selbstverständlich auch um das Fahrgestell 1 selbst handeln kann. Entscheidend ist lediglich, dass der Hilfsantrieb sich an dem Fahrgestell 1 abstützen kann und dementsprechend eine starre Verbindung zum Fahrgestell 1 besteht.

Relativ zu dem Rahmenteil/Fahrgestell 1 ist ein Träger 3 bewegbar gehalten. In dem gezeigten Beispiel weist der Träger ein Langloch 4 auf, das über einem Zapfen 5 gleitet. Der Zapfen 5 ist starr mit dem Fahrgestell 1 verbunden und hält auf diese Weise den Träger 3.

Von dem Träger 3 wird eine Antriebswalze 6 drehbar gehalten, die wiederum von einem nicht dargestellten Antriebsmotor angetrieben wird. Um die Antriebswalze 6 in Drehbewegung zu versetzen, kann der Antriebsmotor z.B. über eine Fernsteuerung oder durch entsprechende Verdrahtung ein- und ausgeschaltet werden.

Das Ausführungsbeispiel von Fig. 2 ist nur schematisch dargestellt. Der Träger 3 kann zusammen mit dem Antriebsmotor und der Antriebswalze auch in der z.B. in der EP 0 827 898 A1 oder der EP 1 203 713 B1 beschriebenen Weise aufgebaut sein. In Fig. 2 soll lediglich das Wirkprinzip dargestellt werden.

Gemäß der Darstellung von Fig. 2 ist die Antriebswalze 6 von dem Rad 2 getrennt. Die Antriebswalze 6 befindet sich zusammen mit dem Träger 3 in einer Zwischenstellung zwischen Ruheposition und Antriebsposition.

Zum Vergleich ist in Fig. 3 der gleiche Hilfsantrieb gezeigt, jedoch in Antriebsposition, in der die Antriebswalze 6 gegen das Rad 2 drückt.

Die Stellung des Trägers 3 mit der Antriebswalze 6 und dem nicht dargestellten Antriebsmotor wird mit Hilfe eines als Handbetätigungselement dienenden Betätigungshebels 7 verändert. Der Betätigungshebel 7 kann aus der in Fig. 2 gezeigten Zwischenstellung in die in Fig. 3 gezeigte Antriebsposition oder in eine nicht dargestellte Ruheposition bewegt werden. Wenn der Träger 3 sich in der Antriebsposition befindet, steht der Zapfen 5 auf der Stelle A in dem Langloch 4, während der Zapfen 5 bei Stellung des Trägers 3 in Ruheposition an der Stelle R steht, wie aus Fig. 2 ersichtlich.

Der Betätigungshebel 7 ist Bestandteil eines Bewegungsmechanismus, der außerdem eine mit dem Hebel gekoppelte Kurvenscheibe 8, eine Schubstange 9 und eine als Energiespeicher dienende Blattfeder 10 aufweist. Der Betätigungshebel 7 ist zusammen mit der Kurvenscheibe 8 um eine Achse 11 verschwenkbar.

Aus dem Vergleich der Fig. 2 und 3 ist ersichtlich, dass durch die entsprechende Außenkontur der Kurvenscheibe 8 die Blattfeder in der in Fig. 2 gezeigten Zwischenstellung bzw. auch in einer entsprechenden Ruheposition R ausgelenkt wird, während sie bei der in Fig. 3 gezeigten Antriebsposition A stärker entspannt ist. Dementsprechend weist die Außenkontur der Kurvenscheibe 8 einen Kreissegmentbereich auf, der konzentrisch zu der Achse 11 steht, sowie einen abgeflachten Bereich, auf dem die Blattfeder 10 in der Antriebsstellung von Fig. 3 zu liegen kommt.

Durch geeignete Wahl der Relativlage der Blattfeder 10 zu der Achse 11 und Gestaltung des Kraftwirkungspunktes zwischen der Blattfeder 10 und der Kurvenscheibe 8 ist es möglich, dass ein Drehmoment zwischen der Kurvenscheibe 8 und der Blattfeder 10 übertragen wird. Insbesondere kann durch die Blattfeder 10 eine Kraft auf die Kurvenscheibe 8 ausgeübt werden, deren Vektor nicht die Achse 11 schneidet. Dementsprechend erzeugt die Blattfeder 10 ein Drehmoment um die Achse 11.

Bei der in Fig. 3 gezeigten Antriebsstellung A ist die Blattfeder 10 im Verhältnis zu der Ruheposition R aus Fig. 2 entspannter und speichert somit weniger Energie. Beim Zurückziehen des Trägers 3 jedoch durch Verschwenken des Betätigungshebels 7 wird die Blattfeder 10 aufgrund der Form der Kurvenscheibe 8 stärker ausgelenkt und nimmt die in Fig. 2 gezeigte Position ein. Durch die Verformung der Blattfeder 10 speichert sie Energie. Der Bediener muss dementsprechend eine erhöhte Kraft auf den Betätigungshebel 7 ausüben, um das erforderlich Drehmoment zu erzeugen. Die Energie bleibt in der Blattfeder 10 gespeichert, bis der Bediener den Betätigungshebel 7 wieder in die Gegenrichtung verschwenkt, um den Träger 3 in die Antriebsposition zu bewegen. Dann gibt die Blattfeder 10 die gespeicherte Energie ab und erzeugt an der Kurvenscheibe 8 ein Drehmoment, dass in eine Kraft gewandelt wird, die die Bewegung des Trägers 3 unterstützt, sodass die vom Bediener am Betätigungshebel 7 aufzubringende Kraft geringer ist.

Je nach Ausführungsform kann es auch zweckmäßig sein, dass die Kurvenscheibe 8 eine spiralförmige Außenkontur erhält, um den Kraftwirkungspunkt zwischen der Blattfeder 10 und der Kurvenscheibe 8 hinsichtlich seines Abstands und seiner Lage von der Achse 11 zu entfernen und eine Änderung des wirkenden Drehmoments zu erreichen.

Wie bereits gesagt, kann der Träger 3 auch in beliebiger anderer Weise mit Hilfe einer Linearführung oder um eine Schwenkachse (vertikal oder horizontal angeordnet) bewegt werden. Dies hat auf die Erfindung jedoch keine Auswirkung. So ist es ohne Weiteres möglich, dass der in den Fig. 2 und 3 gezeigte Träger 3 statt linear entlang dem Zapfen 5 um eine feststehende vertikale oder horizontale Achse mit Hilfe der Schubstange 9 verschwenkt wird.

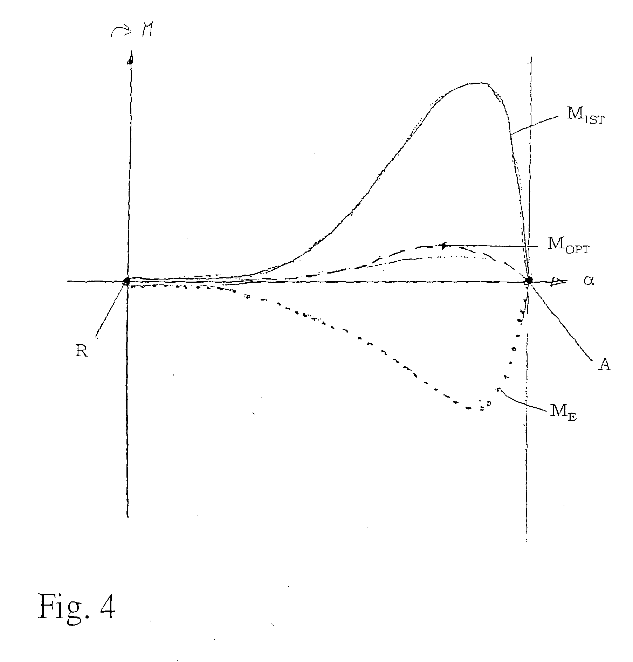

Fig. 4 zeigt in analoger Weise zu Fig. 1 den Drehmomentenverlauf, wobei die durchgezogene Linie das Drehmoment M_{IST} repräsentiert, das auftreten würde, wenn der Bewegungsmechanismus keinen Energiespeicher in Form der Blattfeder 10 aufweisen würde. Die gepunktete Linie M_{E} zeigt dass das Drehmoment, das sich durch die in der Blattfeder 10 gespeicherte Energie ergibt, während mit M_{OPT} das vom Bediener an dem Betätigungshebel 7 durch seine Handkraft aufzubringende Drehmoment dargestellt ist. Selbstverständlich ist Fig. 4 - wie Fig. 1 - nur eine exemplarische qualitative Darstellung.

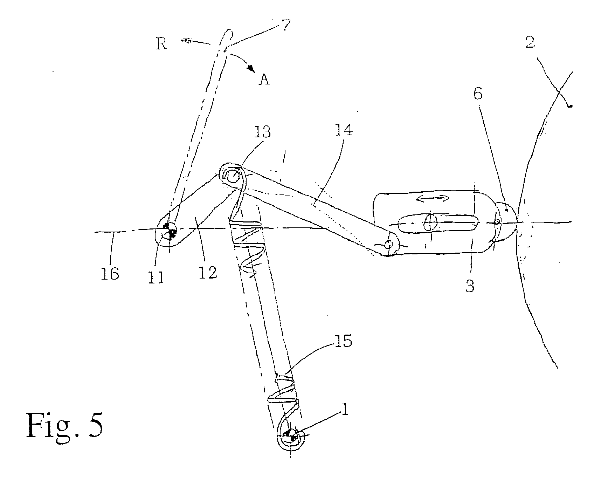

In Fig. 5 ist eine zweite Ausführungsform der Erfindung dargestellt, bei der der Träger 3 mit der Antriebswalze 2 im Wesentlichen dem in Zusammenhang mit den Fig. 2 und 3 beschriebenen Träger 3 entspricht.

Der bei der zweiten Ausführungsform verwendete Bewegungsmechanismus weist ebenfalls den um die Achse 11 verschwenkbaren Betätigungshebel 7 auf. Mit dem Betätigungshebel 7 ist ein erster Lenker 12 fest verbunden, der über ein Kniegelenk 13 an einen zweiten Lenker 14 angeschlossen ist. Der zweite Lenker 14 führt dann zu dem Träger 3 und bewegt ihn in der erforderlichen Weise.

An dem Kniegelenk 13 greift eine als Energiespeicher dienende Schraubenfeder 15 an, die an dem Fahrgestell 1 abgestützt ist.

Bei der in Fig. 5 gezeigten Darstellung befindet sich die Antriebswalze 6 kurz vor ihrer Antriebsposition A. Sie berührt jedoch die Lauffläche des Reifens 2 noch nicht. Vielmehr müsste der Betätigungshebel 7 weiter in Richtung des Pfeils A gedrückt werden, sodass das Kniegelenk 13 über seine Nullstellung (Winkel zwischen erstem Lenker 12 und zweitem Lenker 14 ist 180°; Kniehebeltotpunkt) durchgedrückt wird. Erst wenn das Kniegelenk 13 unterhalb einer Bezugslinie 16 steht, erreicht die Antriebswalze 6 ihre Antriebsposition. Selbstverständlich muss ein weiteres Durchschwenken des Kniegelenks 13 durch einen geeigneten Anschlag vermieden werden. Der Kniehebeltotpunkt mit Feder 15 dient somit auch zum sicheren Erkennen der Endlage (Ruheposition).

Die Bewegung des Kniegelenks 13 über die Bezugslinie 16 hinaus wird durch die vorgespannte Schraubenfeder 15 unterstützt. Damit wird es dem Bediener erleichtert, nicht nur das Kniegelenk 13 durch seine Nullstellung zu drücken, sondern gleichzeitig auch die erforderliche Anpresskraft für die Antriebswalze 6 gegen den Reifen 2 bereitzustellen.

Beim Rückverschwenken des Betätigungshebels 7, um den Träger 3 in seine Ruheposition R zu bewegen, wird die Schraubenfeder 15 hingegen gespannt und kann auf diese Weise die erforderliche Energie speichern. Die Schraubenfeder 15 ist in der Lage, die Energie auch über einen längeren Zeitraum (Tage, Monate) zu halten und erst bei Bedarf wieder abzugeben.

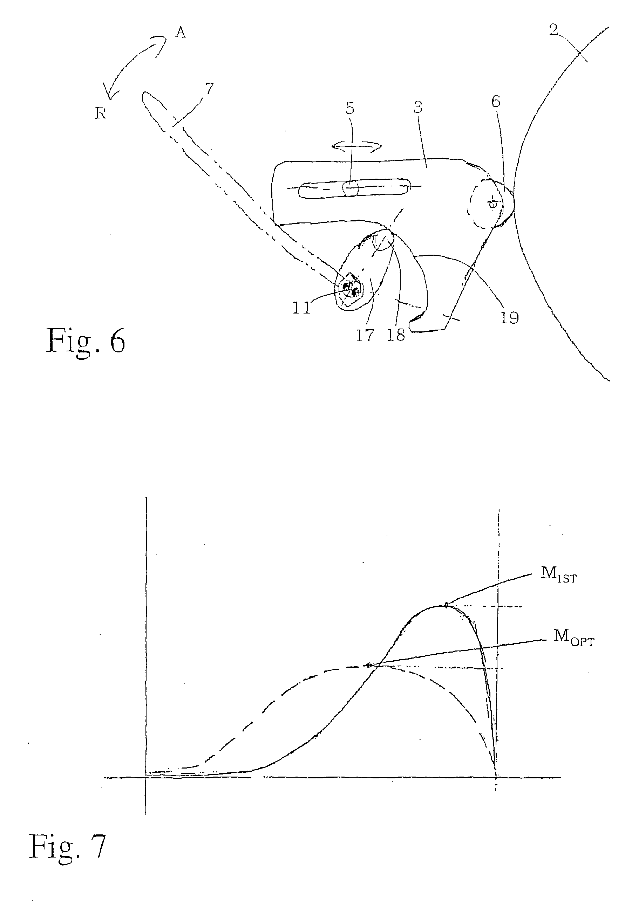

In Fig. 6 wird eine dritte Ausführungsform der Erfindung gezeigt, bei der der Bewegungsmechanismus anstelle eines Energiespeichers einen Übertragungsmechanismus aufweist, dessen Übertragungswirkung in Abhängigkeit von der Schwenkstellung des als Handbetätigungselements dienenden Bedienhebels veränderlich ist.

Für diesen Zweck ist mit dem Betätigungshebel 7 ein Führungselement 17 fest verbunden, das ebenfalls um die Achse 11 verschwenkbar ist.

Das Führungselement 17 trägt vorzugsweise eine Laufrolle 18, die entlang einer mit dem Träger 3 verbundenen Kurvenführung 19 bewegbar ist. Anstelle der Kurvenführung 19 kann auch eine geschlossene Kulissenführung gewählt werden.

Beim Verschwenken des Betätigungshebels 7 in die Antriebsposition A wird auch das Führungselement 17 verschwenkt, sodass die Laufrolle 18 gegen die Kurvenführung 19 drückt und dadurch den Träger 3 zusammen mit der Antriebswalze 6 gegen den Reifen 2 drückt.

Sofern die Kurvenführung 19 als Kulissenführung ausgestaltet ist, zieht die Laufrolle 18 beim Zurückschwenken des Betätigungshebels 7 in die Ruhestellung R den Träger 3 ebenfalls zurück, sodass die Antriebswalze 6 von dem Reifen 2 getrennt wird. Alternativ dazu kann der Träger 3 auch durch eine Federeinrichtung aus der Antriebsposition in die Ruheposition zurückgezogen werden.

Anstelle der gezeigten Laufrolle 18 und der Kurvenführung 19 ist es selbstverständlich ohne weiteres möglich, mit Hilfe von Nocken oder Exzentern ähnliche Wirkungen zu erreichen.

Von besonderem Vorteil ist es, wenn die Kurvenführung 19 unterschiedliche Krümmungsradien aufweist. Dadurch ist es möglich, dass in einem ersten Bewegungsabschnitt, in dem der Bediener noch keine großen Kräfte aufbringen muss, eine relativ zügige Bewegung des Trägers 3 erreicht, während in dem Bereich, in dem der Bediener normalerweise eine hohe Bedienkraft aufbringen müsste, durch Gestaltung der Kurvenführung 19 größere Schwenkwege des Betätigungshebels 7 lediglich kleinere Verschiebe- bzw. Schwenkwege des Trägers 3 bewirken. Auf diese Weise ist es möglich, die Übertragungswirkung bzw. das Übersetzungsverhältnis des Bewegungsmechanismus während des Verschwenkens des Betätigungshebels 7 - in Abhängigkeit von dessen Absolutstellung - zu verändern.

Fig. 7 zeigt die zugehörigen Drehmomentverläufe, wobei mit M_{IST} erneut das Drehmoment dargestellt ist, das auftreten würde, wenn der Bewegungsmechanismus nicht in der erfindungsgemäßen Weise ausgestaltet wäre, während M_{OPT} als gestrichelte Linie den verbesserten, d.h. vergleichmäßigten Drehmomentverlauf zeigt. Es ist zu erkennen, dass das maximale Drehmoment bei M_{OPT} deutlich unter dem bisher auftretenden maximalen Drehmoment des Verlaufs M_{IST} liegt.

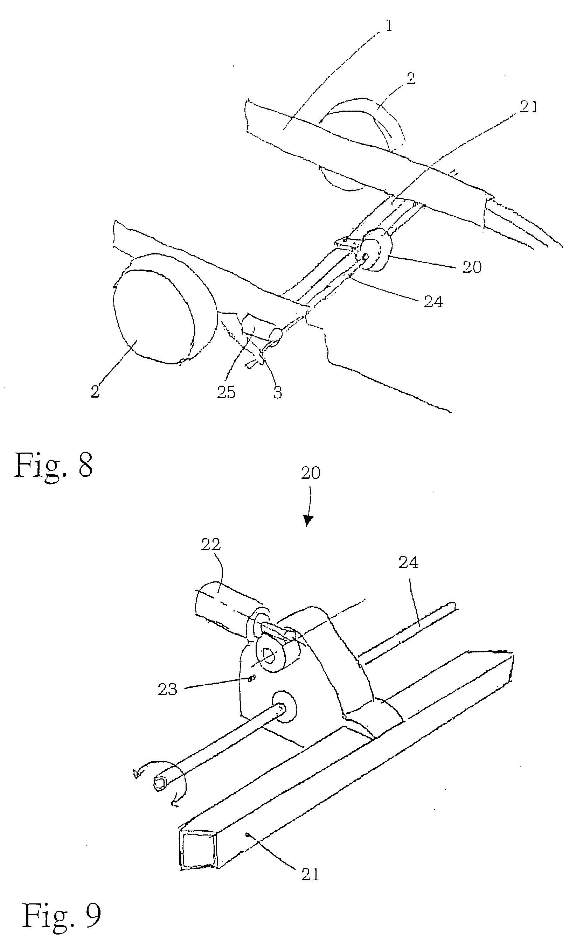

Die Fig. 8 und 9 zeigen eine vierte Ausführungsform der Erfindung, wobei Fig. 9 eine Ausschnittsvergrößerung von Fig. 8 ist.

An dem Fahrgestell 1 sind zwei Räder drehend gehalten, die jeweils ein Rad 2 tragen.

Zwischen den Rädern 2 ist ein Servoantrieb 20 angeordnet, der von einem auch als Drehmomentstütze dienenden Querträger 21 gehalten ist.

Wie Fig. 9 zeigt, weist der Servoantrieb 20 einen elektrischen Hilfsmotor 22 auf, der über ein Getriebe 23 eine Anschwenkstange 24 drehend antreibt. Der Hilfsmotor 22 und das Getriebe 23 können eine Motor-Getriebe-Einheit bilden. Die Drehrichtung des Hilfsmotors 22 ist umkehrbar, sodass die Anschwenkstange 24 in beide Richtungen gedreht werden kann.

Die Anschwenkstange 24 wird auf beiden Seiten nach außen zu den Rädern 2 geführt, sodass dort der jeweils zugeordnete Träger 3 zwischen seiner Ruheposition und seiner Antriebsposition verschwenkt werden kann. Die Anschwenkstange 24 kann parallel zu dem Querträger 1, aber auch innerhalb des Querträgers 21 angebracht werden.

Anstelle des Servoantriebs 20, der etwa in der Mitte zwischen den beiden Rädern 2 angeordnet ist, kann auch ein Servoantrieb 25 vorgesehen sein, der nur auf einer Seite des Fahrwerks 1 angebracht ist und dessen Drehbewegung trotzdem über die Anschwenkstange 24 auch zu dem gegenüberliegenden Träger 3 des anderen Rads 2 übertragen wird. Ebenso ist es möglich, dass jedem Träger 3 ein einzelner Servoantrieb 25 zugeordnet wird, um den Träger 3 zwischen der Ruheposition und der Antriebsposition zu verschwenken.

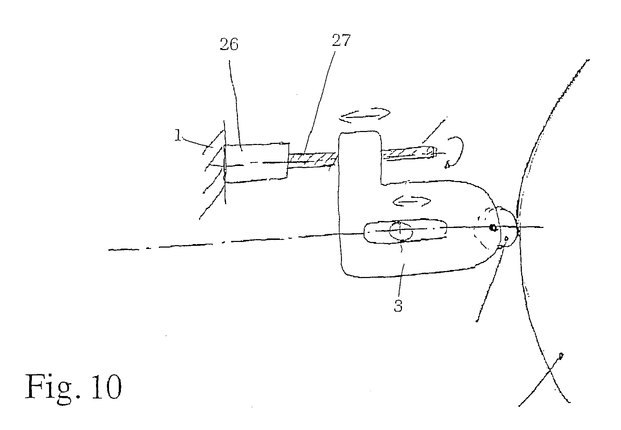

Fig. 10 zeigt als Variante eine fünfte Ausführungsform der Erfindung, bei der der Servoantrieb durch eine Motor-Getriebe-Einheit 26 gebildet wird, die an dem Fahrgestell 1 gehalten ist und eine Spindel 27 drehend antreibt. Mit Hilfe der Spindel 27 wird der Träger 3 linear zwischen seiner Ruheposition und seiner Antriebsposition hin- und herbewegt.

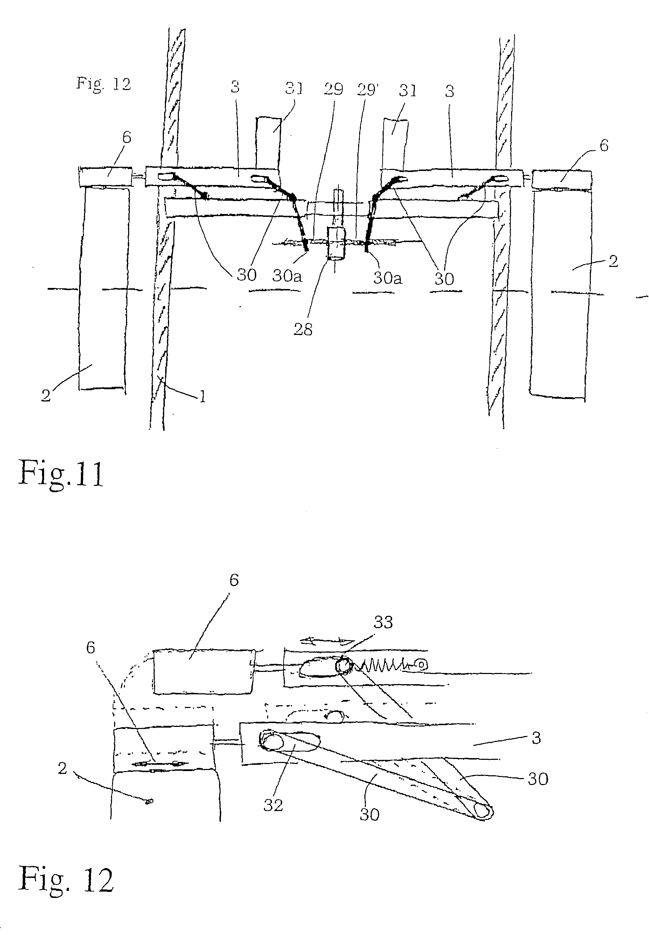

Eine sechste Ausführungsform der Erfindung ist in Fig. 11 und als Ausschnittsvergrößerung in Fig. 12 dargestellt.

Ein von dem Fahrwerk 1 gehaltener bzw. abgestützter Servoantrieb 28 treibt - als Motor-Getriebe-Einheit ausgebildet - sich nach beiden Seiten ersteckende Anschwenkspindeln 29 und 29' an. Jede Spindel 29, 29' ist jeweils über einen Hebel 30a und über eine Parallelführung 30 mit einem Träger 3 verbunden, der entsprechend durch die Parallelführung 30 relativ zu dem Fahrwerk 1 parallel verschoben werden kann. Auf dem Träger 3 ist auch jeweils ein Antriebsmotor 31 vorgesehen. Der Servoantrieb 28 dreht die Anschwenkspindeln 29 und 29', auf denen sich die Hebel 30a in entsprechend geführter Weise bewegen. Dadurch werden, eine entsprechende Drehrichtung der Spindeln 29, 29' vorausgesetzt, die Träger 3 jeweils parallel nach außen verschoben.

Durch die Parallelverschiebung des Trägers 3 wird die Antriebswalze 6 gegen das Rad 2 gedrückt. Durch die Symmetrie des Aufbaus erfolgt die Bewegung der beiden Träger 3 gleichzeitig. Bei einer umgekehrten Drehbewegung des Servoantriebs 28 ziehen die Anschwenkspindeln 29, 29' die Träger 3 gleichzeitig parallel nach innen, sodass die Träger in ihre Ruheposition gelangen können.

Wenn die Antriebswalze 6 die Lauffläche des Rads 2 erreicht hat, muss sie weiter gegen das Rad 2 gedrückt werden, um eine ausreichende Reibwirkung erzielen zu können. Aufgrund der Parallelführung 30 wird jedoch die Antriebswalze 6 nicht nur radial zu dem Rad 2, sondern auch axial bewegt, wodurch in der Berührfläche zwischen der Antriebswalze 6 und der Lauffläche des Rads 2 ein Radiereffekt auftritt, der die Lauffläche schädigen kann.

Zur Vermeidung dieses Radiereffekts ist in dem Träger 3 ein Langloch 32 ausgebildet, in den die Parallelführung 30 eingreift. Wie Fig. 12 zeigt, befindet sich ein zu der Parallelführung 30 gehörender Zapfen 33 zunächst in einem hinteren Bereich des Langlochs 32. Sobald die Antriebswalze 6 die Lauffläche des Rads 2 erreicht hat und dadurch nicht mehr nennenswert radial in Richtung des Rads 2 bewegt werden kann, verlagert sich bei der weiteren Bewegung der Träger 3 entlang dem Zapfen 33 relativ zu der Parallelführung 30, wie durch entsprechende Zwischenstellungen in Fig. 12 gekennzeichnet. Eine axiale Verschiebung des Trägers 3 zusammen mit der Antriebswalze 6 findet dabei nicht mehr statt. Vielmehr werden der Träger 3 und die Antriebswalze 6 lediglich radial in Richtung des Rads 2 angezogen, bis sie die Antriebsposition erreicht haben.

Als Servoantriebe wurden bisher lediglich elektrische Hilfsmotoren beschrieben. Bei den in den Figuren nicht dargestellten Varianten der Erfindung sind jedoch Servoantriebe vorgesehen, bei denen die erforderliche Bewegung des Trägers mit Hilfe eines Stellglieds erreicht wird. Dabei eignen sich elektrische, elektrohydraulische, elektromagnetische, hydraulische, hydro-pneumatische oder pneumatische Stellglieder. Ein pneumatisches Stellglied kann z.B. durch einen üblichen Camping-Kompressor betrieben werden, welcher sonst zum Füllen von Luftmatratzen u.ä. verwendet wird. Der Kompressor muss nur dann an das pneumatische Stellglied angeschlossen werden, wenn die Position des Trägers 3 zu verändern ist.

Weiterhin ist es zweckmäßig, wenn eine Arretiervorrichtung vorgesehen ist, mit der zumindest die Antriebsposition des Trägers, vorzugsweise aber auch die Ruheposition des Trägers sicher gehalten werden kann. Als Arretiereinrichtung eignen sich Riegel, Rasteinrichtungen oder Kniehebelmechanismen, wie z.B. aus der EP 0 827 898 A1 bekannt.

Wie oben bereits beschrieben, ist es durch die Erfindung möglich, den Träger in nahezu beliebiger Weise zwischen der Ruheposition und der Antriebsposition zu bewegen. Außer einer linearen Bewegung kann der Träger auch seitlich, radial oder axial um beliebig angeordnete Achsen verschwenkt werden. Auf diese Weise ist es möglich, dass der Träger in seiner Ruheposition in einem geschützten Bereich unterhalb oder innerhalb des Fahrwerks geparkt wird, wo er beim normalen Verfahren des Anhängers mit einer Zugmaschine geschützt untergebracht ist, ohne Schaden nehmen zu können. Selbstverständlich können auch verschiedene Bewegungsformen wie Verschwenken oder Linearverschieben miteinander kombiniert werden, um den gewünschten Bewegungsweg des Trägers zu erreichen.

## Patentansprüche

1. Hilfsantrieb für einen Anhänger, mit
- einem starr mit einem Fahrgestell (1) des Anhängers verbundenen Rahmenteil;
- einem relativ zu dem Rahmenteil bewegbaren Träger (3);
- einem von dem Träger (3) gehaltenen Antriebsmotor;
- einer an dem Träger (3) gelagerten, von dem Antriebsmotor antreibbaren Antriebswalze (6); und mit
- einem Bewegungsmechanismus zum Bewegen des Trägers (3) zwischen einer Ruheposition, in der die Antriebswalze (6) von einem Rad (2) des Anhängers getrennt ist, und einer Antriebsposition, in der die Antriebswalze (6) gegen das Rad (2) des Anhängers gedrückt wird;
wobei
- der Bewegungsmechanismus ein analog zu den Positionen des Trägers (3) zwischen einer Ruheposition und einer Antriebsposition bewegbares Handbetätigungselement (7) aufweist, dessen Bewegung über den Bewegungsmechanismus auf den Träger (3) übertragen wird;
wobei
- der Bewegungsmechanismus einen Energiespeicher (10; 15) und wenigstens einen Kniehebelmechanismus (12, 13, 14) aufweist;
- der Energiespeicher (10; 15) während eines ersten Bewegungsabschnitts des Handbetätigungselements (7) aufladbar ist;
- während eines zweiten Bewegungsabschnitts des Handbetätigungselements (7) der Kniehebelmechanismus überwindbar und gleichzeitig der Energiespeicher (10; 15) entladbar ist, zum Unterstützen der Bewegung des Trägers (3) und zum Überwinden des Kniehebeleffekts; und wobei
- der zweite Bewegungsabschnitt in dem Bewegungsvorgang beim Bewegen des Handbetätigungselements (7) aus der Ruheposition in die Antriebsposition liegt.

2. Hilfsantrieb nach Anspruch 1, **dadurch gekennzeichnet, dass** der zweite Bewegungsabschnitt wenigstens teilweise den Teil der Bewegung umfasst, bei dem die Antriebswalze (6) gegen das Rad (2) gedrückt wird.

3. Hilfsantrieb nach Anspruch 1 oder 2, **dadurch gekennzeichnet, dass** der erste Bewegungsabschnitt in dem Bewegungsvorgang beim Bewegen des Handbetätigungselements (7) aus der Antriebsposition in die Ruheposition liegt.

4. Hilfsantrieb nach Anspruch 1 oder 2, **dadurch gekennzeichnet, dass** der erste Bewegungsabschnitt in dem Bewegungsvorgang beim Bewegen des Handbetätigungselements (7) aus der Ruheposition in die Antriebsposition liegt, jedoch vor dem zweiten Bewegungsabschnitt, derart, dass das Handbetätigungselement (7) beim Bewegen aus der Ruheposition in die Antriebsposition zuerst den ersten Bewegungsabschnitt und danach den zweiten Bewegungsabschnitt passiert.

5. Hilfsantrieb nach einem der Ansprüche 1 bis 4, **dadurch gekennzeichnet, dass** der Energiespeicher eine Federeinrichtung (10; 15) aufweist.

6. Hilfsantrieb nach Anspruch 5, **dadurch gekennzeichnet, dass** der Bewegungsmechanismus eine mit dem Energiespeicher (10; 15) zusammenwirkende, bewegbare Kurvenscheibe aufweist, derart, dass unterschiedliche Kurvenscheiben-Stellungen unterschiedliche Ladezustände des Energiespeichers bewirken.

7. Hilfsantrieb nach einem der Ansprüche 1 bis 6, **dadurch gekennzeichnet, dass** der Kniehebelmechanismus (12, 13, 14) gegen die Wirkung einer am Knie des Kniehebelmechanismus (12, 13, 14) angreifenden Feder (15) bewegbar ist.

8. Hilfsantrieb für einen Anhänger, mit
- einem starr mit einem Fahrgestell (1) des Anhängers verbundenen Rahmenteil;
- einem relativ zu dem Rahmenteil bewegbaren Träger (3);
- einem von dem Träger (3) gehaltenen Antriebsmotor;
- einer an dem Träger (3) gelagerten, von dem Antriebsmotor antreibbaren Antriebswalze (6); und mit
- einem Bewegungsmechanismus zum Bewegen des Trägers (3) zwischen einer Ruheposition, in der die Antriebswalze (6) von einem Rad (2) des Anhängers getrennt ist, und einer Antriebsposition, in der die Antriebswalze (6) gegen das Rad (2) des Anhängers gedrückt wird;
wobei
- der Bewegungsmechanismus ein analog zu den Positionen des Trägers (3) zwischen einer Ruheposition und einer Antriebsposition bewegbares Handbetätigungselement (7) aufweist, dessen Bewegung über den Bewegungsmechanismus auf den Träger (3) übertragen wird;
**dadurch gekennzeichnet, dass**
- der Bewegungsmechanismus einen Übertragungsmechanismus (17, 18, 19) aufweist, mit einer über den Bewegungsweg des Handbetätigungselements (7) veränderlichen Übertragungswirkung, derart, dass ein bestimmter Bewegungsweg des Handbetätigungselements (7) unterschiedlich lange Bewegungswege des Trägers (3) bewirkt, je nach dem, ob sich das Handbetätigungselement (7) und der Träger (3) näher bei der Ruheposition oder näher bei der Antriebsposition befinden; und dass
- ein gleich langer Bewegungsweg des Handbetätigungselements (7) in der Nähe der Ruheposition einen größeren Bewegungsweg des Trägers (3) bewirkt als in der Nähe der Antriebsposition.

9. Hilfsantrieb nach Anspruch 8, **dadurch gekennzeichnet, dass** beim Bewegen des Handbetätigungselements (7) aus der Ruheposition in die Antriebsposition in einem ersten Bewegungsabschnitt ein erstes Übertragungsverhältnis zwischen der Bewegung des Handbetätigungselements (7) und der Bewegung des Trägers (3) gebildet wird, derart, dass ein bestimmter Bewegungsweg des Handbetätigungselements (7) einen ersten Bewegungsweg des Trägers (3) bewirkt, und dass in einem zweiten Bewegungsabschnitt ein zweites Übertragungsverhältnis zwischen der Bewegung des Handbetätigungselements (7) und der Bewegung des Trägers (3) gebildet wird, derart, dass der bestimmte Bewegungsweg des Handbetätigungselements (7) einen zweiten Bewegungsweg des Trägers (3) bewirkt.

10. Hilfsantrieb nach Anspruch 9, **dadurch gekennzeichnet, dass** der zweite Bewegungsabschnitt wenigstens teilweise den Teil der Bewegung umfasst, bei dem die Antriebswalze (6) gegen das Rad (2) gedrückt wird.

11. Hilfsantrieb nach Anspruch 9 oder 10, **dadurch gekennzeichnet, dass** der zweite Bewegungsweg des Trägers (3) kürzer als der erste Bewegungsweg des Trägers (3) ist.

12. Hilfsantrieb nach einem der Ansprüche 8 bis 11, **dadurch gekennzeichnet, dass** der Übertragungsmechanismus eine Kurvenführung (19) aufweist.

13. Hilfsantrieb nach Anspruch 12, **dadurch gekennzeichnet**, das die Kurvenführung einen Exzenter aufweist.

14. Hilfsantrieb nach einem der Ansprüche 1 bis 13, **dadurch gekennzeichnet, dass** der Träger (3) im Wesentlichen radial zu dem Rad (2) des Anhängers bewegbar ist.

15. Hilfsantrieb nach einem der Ansprüche 1 bis 14, **dadurch gekennzeichnet, dass** der Träger (3) linear bewegbar ist.

16. Hilfsantrieb nach einem der Ansprüche 1 bis 15, **dadurch gekennzeichnet, dass** die Antriebswalze (6) an die Lauffläche des Rads (2) heranschwenkbar ist.

17. Hilfsantrieb nach einem der Ansprüche 1 bis 16, **dadurch gekennzeichnet, dass** die Antriebswalze (6) in einer Schwenkebene an die Lauffläche des Rads (2) heranschwenkbar ist, wobei die Schwenkebene
- senkrecht zu einer Drehachse des Rads (2) steht,
- die Drehachse umfasst, oder
- in einem Winkel zu einer die Drehachse umfassenden Ebene steht.

18. Hilfsantrieb nach einem der Ansprüche 1 bis 17, **dadurch gekennzeichnet, dass** eine Arretiereinrichtung vorgesehen ist, zum Arretieren des Trägers (3) relativ zu dem Rahmenteil (1) wenigstens in der Antriebsposition.
